# FASCICULE DE BREVET EUROPEEN

(11) **EP 3 641 063 B1**
(45) Date de publication et mention de la délivrance du brevet: **17.04.2024**
(21) Numéro de dépôt: 19200830.8
(22) Date de dépôt: 01.10.2019
(51) Int. Cl.: H01R 9/26, H02B 1/20

(54) **DISPOSITIF D'ALIMENTATION ET DE RACCORDEMENT ÉLECTRIQUE D'UN CONTACTEUR A UN ENSEMBLE D'APPAREILS ÉLECTRIQUES MODULAIRES MONTÉS CÔTE À CÔTE SUR UN MÊME SUPPORT DE MONTAGE ET SYSTÈME COMPRENANT UN TEL DISPOSITIF**
VORRICHTUNG ZUR STROMVERSORGUNG UND ZUM ELEKTRISCHEN ANSCHLUSS EINES SCHÜTZES AN EINEN SATZ MODULARER ELEKTRISCHER EINHEITEN, DIE NEBENEINANDER AUF EINER MONTAGESCHIENE MONTIERT SIND UND SYSTEM MIT EINER SOLCHEN VORRICHTUNG
DEVICE FOR SUPPLYING POWER AND FOR ELECTRICALLY CONNECTING A CONTACTOR TO A SET OF MODULAR ELECTRICAL UNITS MOUNTED SIDE-BY-SIDE ON A MOUNTING RAIL AND SYSTEM COMPRISING SUCH A DEVICE

(30) Priorité: 19.10.2018 FR 1859668
(43) Date de publication de la demande: 22.04.2020
(73) Titulaire: Schneider Electric Industries SAS, 92500 Rueil Malmaison (FR)
(72) Inventeur: BURNOT, Claude, 38050 Grenoble (FR)
(74) Mandataire: Lavoix

(56) Documents cités:
- EP-A1- 0 980 125
- EP-A1- 1 137 034
- DE-A1-102013 220 895

## Description

### DOMAINE TECHNIQUE

La présente invention concerne un dispositif d'alimentation et de raccordement électrique d'un contacteur à un ensemble d'appareils électriques modulaires montés côte à côte sur un support de montage, ledit dispositif comportant un ensemble de barres conductrices montées dans un support isolant dit premier, chaque barre véhiculant une phase ou le neutre et comportant des dents de raccordement aux différentes bornes des appareils, ces dents étant alignées suivant un pas correspondant à celui des appareils modulaires.

La présente invention concerne également un système comprenant ce dispositif ainsi que le contacteur et l'ensemble d'appareils électriques modulaires.

### ETAT DE LA TECHNIQUE ANTERIEURE

La publication de brevet DE 10 2013 220895 décrit un dispositif d'alimentation et de raccordement électrique d'un ensemble d'appareils électriques avec un boitier isolant. Les publications de brevet EP 1 137 034 et EP 0 980 125 décrivent des rails de courant multi-phasé avec un boitier isolant.

Le raccordement électrique d'un contacteur du type tétrapolaire à un ensemble d'appareils électriques modulaires du type phase neutre, ces appareils modulaires étant montés sur un rail de montage, d'un côté ou de l'autre de ce contacteur, s'effectue en général au moyen de câbles. En effet, le pas des bornes du contacteur étant différent de celui des dents du peigne d'alimentation des appareils modulaires, il est impossible de relier électriquement les bornes du contacteur à celles des appareils modulaires au moyen d'un même peigne d'alimentation.

Il est donc nécessaire de préparer au moins quatre câbles et de sertir les embouts de ces câbles, ces câbles reliant électriquement chacune des bornes du contacteur à un peigne standard. Ce mode de raccordement est encombrant, nécessite du temps notamment pour la préparation des câbles et le sertissage des embouts, et présente un risque d'inversion de la phase et du neutre.

La présente invention résout ces problèmes et propose un dispositif d'alimentation et de raccordement électrique d'un contacteur à un ensemble d'appareils électriques modulaires montés côte à côte sur un même support de montage, ce dispositif étant de conception simple, d'encombrement réduit, permettant de réduire le temps de raccordement, et supprimant les risques d'inversion entre la phase et le neutre.

### EXPOSE DE L'INVENTION

À cet effet, la présente invention a pour objet un dispositif d'alimentation et de raccordement selon la revendication 1.

D'autres caractéristiques avantageuses d'un système comprenant un tel dispositif sont décrites à la revendication 2.

Suivant une caractéristique particulière, chaque barre est réalisée à partir d'une barre existante standard, sur laquelle a été effectué une découpe de manière à réaliser la zone dépourvue de dents précitée.

Selon une autre caractéristique, la zone dépourvue de dents précitée s'étend au-delà de l'enveloppe du support isolant dit premier, et le dispositif comporte également un support isolant dit second apte à loger les zones dépourvues de dents précitées desdites barres, ledit second support étant destiné à être fixé de manière amovible au premier support.

Selon une autre caractéristique, le support isolant dit premier comportant des logements destinés à loger les barres s'étendant suivant une direction sensiblement parallèle à la direction d'alignement des dents, caractérisé en ce que le support isolant dit second comporte des logements de barres s'étendant dans le prolongement respectivement de ceux du support isolant dit premier. Selon une autre caractéristique, les dents supplémentaires précitées sont fixées respectivement sur la face supérieure des barres précitées, cette face étant située du côté opposé à celle située en regard des appareils modulaires précités.

Selon une autre caractéristique, les dents supplémentaires précitées sont fixées par soudure sur lesdites barres.

Selon une autre caractéristique, le support isolant dit second présente une dimension suivant une direction sensiblement perpendiculaire au plan de fixation des appareils sur le support de montage, permettant de laisser libre une partie de l'ouverture d'accès aux bornes du contacteur, ceci afin de permettre le repiquage par câbles, sous les dents du dispositif d'alimentation et de raccordement, lesdites dents étant engagées dans les bornes du contacteur.

Selon une autre caractéristique, le dispositif est du type tripolaire et neutre comportant une barre distribuant le neutre et trois barres distribuant une phase, lesdites dents étant alignées et distribuant successivement les différentes phases avec interposition d'une dent distribuant le neutre entre deux dents de phase successives.

Selon une autre caractéristique, les dents supplémentaires sont disposées suivant un pas de 11mm, tandis que les dents destinées à être reliées électriquement aux appareils modulaires sont disposées suivant un pas de 18mm.

Selon une autre caractéristique, chaque appareil modulaire du système selon l'invention est un appareil du type phase et neutre comportant un circuit de phase et un circuit de neutre.

### BREVE DESCRIPTION DES DESSINS

Mais d'autres avantages et caractéristiques de l'invention apparaîtront mieux dans la description détaillée qui suit et se réfère aux dessins annexés donnés uniquement à titre d'exemple et dans lesquels :
- Les figures 1 et 2 sont deux vues en perspective d'un dispositif d'alimentation et de raccordement électrique selon une réalisation particulière de l'invention, avant le raccordement électrique aux appareils, et respectivement pour les deux figures, vu de l'avant et vu de l'arrière des appareils,
- Les figures 3 et 4 sont deux vues identiques aux figures 1 et 2, mais après le raccordement,
- La figure 5 est une vue partielle, en perspective et vue de l'arrière, illustrant un repiquage par câbles, sous les dents engagées dans les bornes du contacteur,
- La figure 6 est une vue en perspective, vu de l'avant, illustrant ce repiquage par câbles pour alimenter une deuxième rangée de disjoncteurs,
- La figure 7 est une vue en perspective éclatée du dispositif d'alimentation et de raccordement des figures précédentes,
- La figure 8 est une vue partielle illustrant séparément les deux parties de ce même dispositif de raccordement, après montage des barres à l'intérieur de l'une des parties,
- La figure 9 est une vue partielle en perspective de ce même dispositif d'alimentation et de raccordement, après fixation de la seconde partie sur la première partie du dispositif,
- La figure 10 est une vue en perspective de ce dispositif d'alimentation et de raccordement, vu du dessous, et
- La figure 11 est une vue en perspective de ce même dispositif, vu du dessus.

### EXPOSE DETAILLE D'UN MODE DE REALISATION PREFERENTIEL DE L'INVENTION

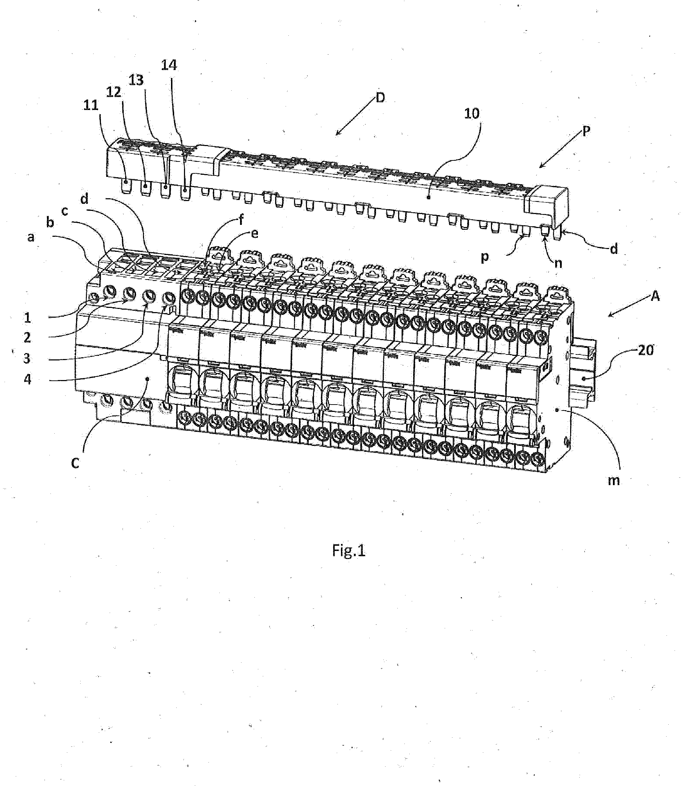

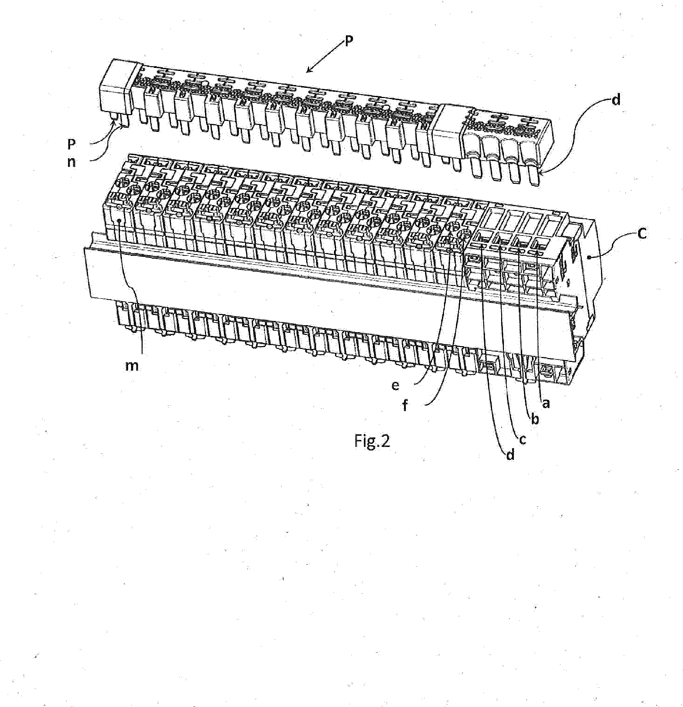

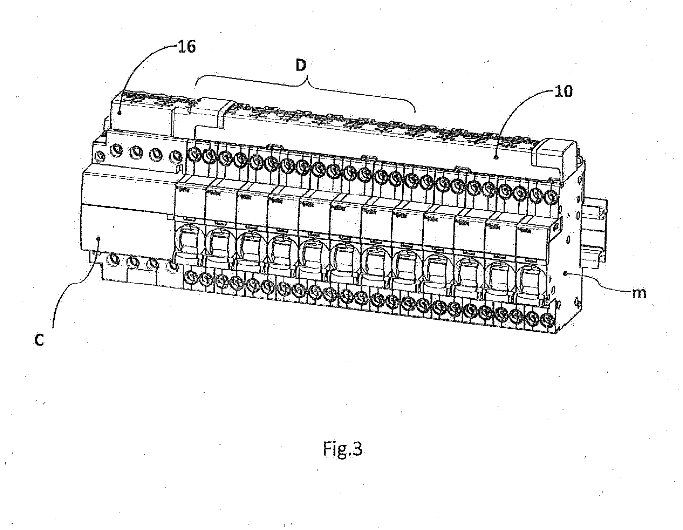

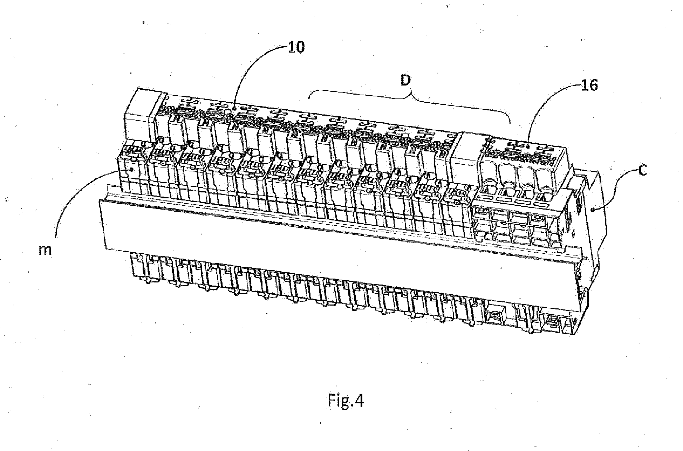

Sur les figures 1 à 4, l'on voit un ensemble A d'appareils électriques modulaires m du type phase neutre, tels des disjoncteurs phase neutre, montés à droite d'un contacteur électrique C comportant quatre pôles 1,2,3,4.

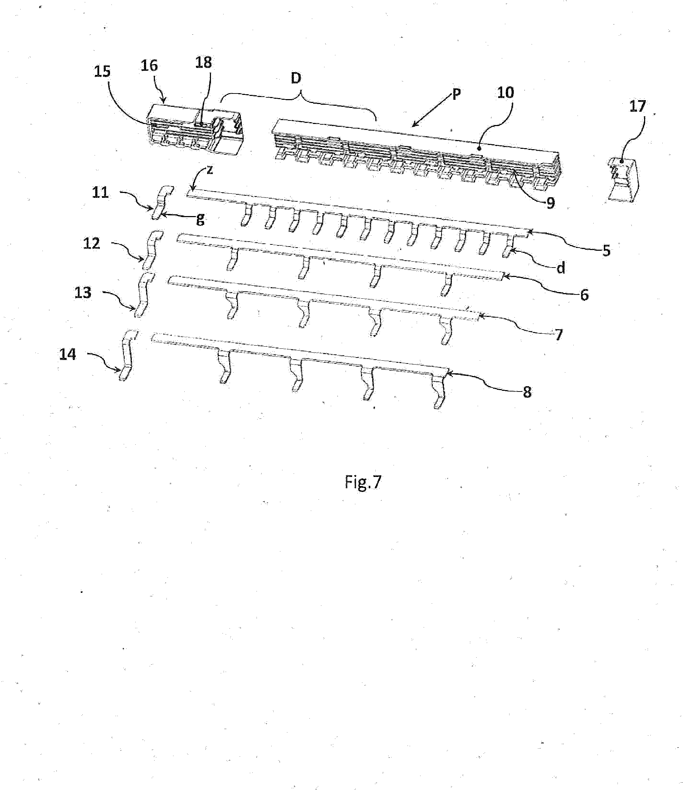

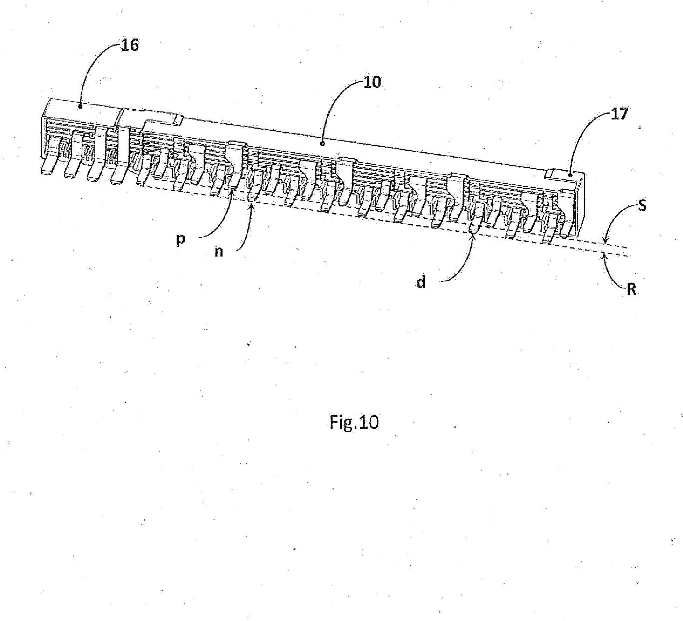

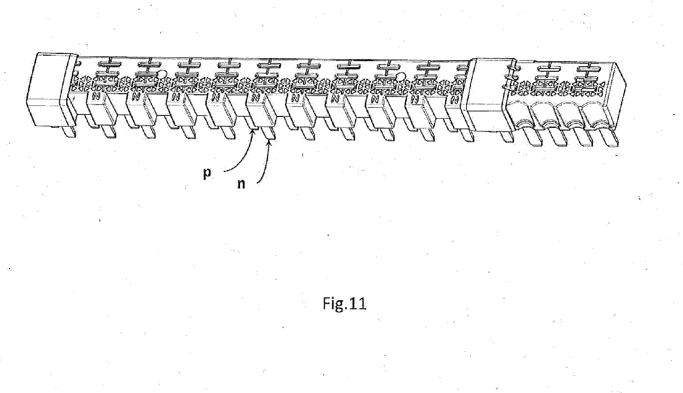

Chaque pôle du contacteur comporte une borne a,b,c,d, phase ou neutre, tandis que chaque disjoncteur modulaire m comporte deux bornes respectivement une borne de phase e et une borne de neutre f. L'alimentation électrique des disjoncteurs s'effectue au moyen d'un peigne de raccordement P du type standard comportant, tel que plus particulièrement illustré sur la figure 7, une barre 5 destinée à véhiculer le neutre et un ensemble de barres 6,7,8 destinées à véhiculer une phase. À cet effet, chacune des barres 6,7,8 comporte un certain nombre de dents d s'étendant sensiblement perpendiculairement à la direction longitudinale de ladite barre, ces dents étant disposées à intervalle régulier le long des barres. Toutes ces barres sont placées dans des logements longitudinaux 9 prévus à cet effet dans un support dit premier 10, de telle manière que l'ensemble constitué par le support dit premier 10 et les barres 5 à 8 présente deux rangées de dents, respectivement une rangée R de dents de neutre n et une rangée S de dents de phase p, avec interposition d'une dent de neutre n entre deux dents de phase p successives, tel qu'illustré sur les figures 10 et 11.

Ces dents sont séparées les unes des autres de telle manière que les dents de phase successives p du peigne P puissent être introduites dans les orifices de bornes de phase e successifs des appareils modulaires, et que les dents de neutre n successives du dispositif puissent être introduites dans les orifices des bornes de neutre f successives des appareils.

Conformément à l'invention, chacune de ces barres 5 à 8 comporte à l'une de ses extrémités, cette extrémité étant située du même côté pour toutes les barres, une zone z destinée à supporter une dent dite dent supplémentaire 11,12,13,14, cette dent étant destinée à être raccordée électriquement à l'une des bornes a,b,c,d du contacteur C. Ainsi, ces quatre parties ou zones libres z situées à l'extrémité des barres 5,6,7,8 forment un ensemble comportant quatre dents 11 à 14 alignées suivant la direction longitudinale des barres et s'étendant suivant une direction sensiblement perpendiculaire au plan de fixation, de telle manière que ces dents puissent être raccordées respectivement aux différents éléments de raccordement des bornes a,b,c,d du contacteur C.

Tel qu'illustré sur la figure 7, les dents d du dispositif d'alimentation et de raccordement selon l'invention, destinées à être introduites dans les bornes e,f des appareils modulaires m, sont venues de matière avec les barres respectives et s'étendent à partir de ces barres, après deux pliages successifs en direction des appareils.

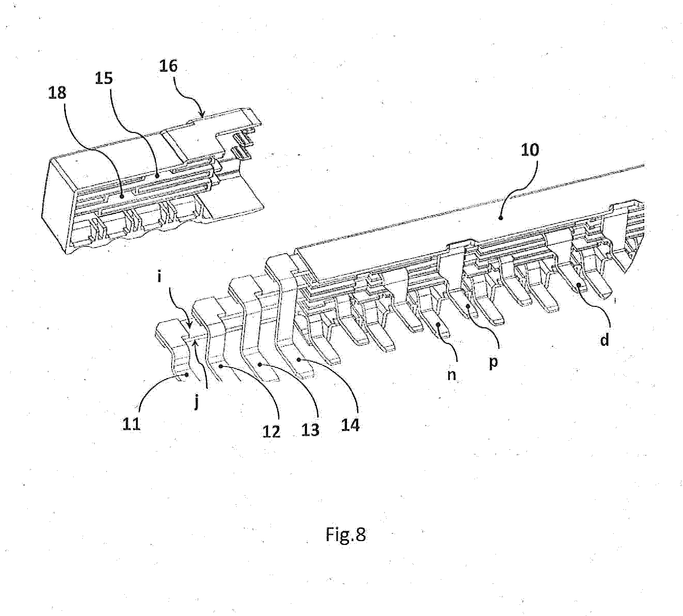

Les dents supplémentaires 11,12,13 et 14 du dispositif d'alimentation et de raccordement D destinées à coopérer avec le contacteur C sont, dans cette réalisation particulière de l'invention illustrée, des éléments indépendants g destinés à être fixés par exemple par soudure, sur la face supérieure i correspondante de la barre, figure 8, opposée à celle j située en regard des appareils modulaires m.

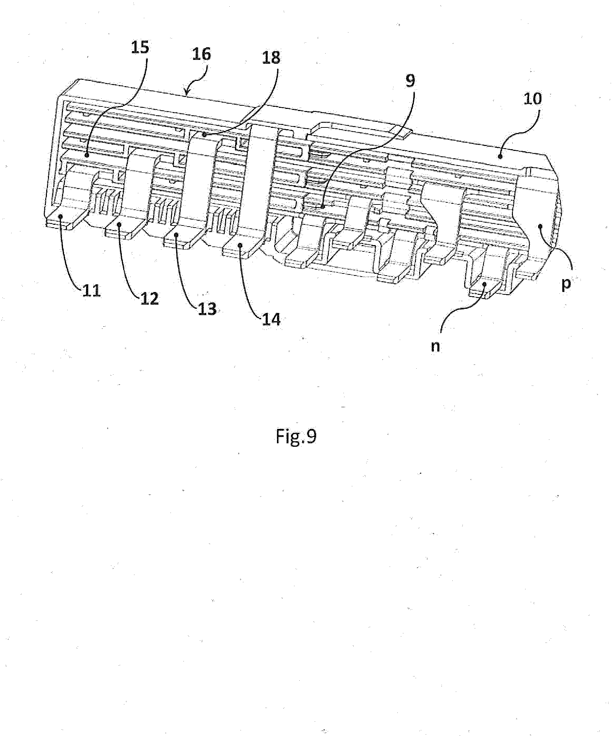

Ces parties d'extrémité des barres 5 à 8 sur lesquelles sont situées ces zones z dépourvues de dents, sont destinées à être montées respectivement dans des rainures 15 appartenant à un support dit second 16, figure 8, lequel support dit second est destiné à être fixé sur le support dit premier 10, par exemple par emboîtement serré, figure 9, préalablement au raccordement des dents d du dispositif d'alimentation et de raccordement aux appareils modulaires correspondants m.

Les rainures ou logements 9 du support dit premier 10 sont situées respectivement dans le prolongement de celles 15 du support dit second 16.

Tel qu'illustré sur la figure 7, le dispositif selon l'invention comporte en outre un cache dit d'extrémité 17 destiné à être monté à l'extrémité du support dit premier 10, opposée à celle destinée à être fixée au support dit second 16, ce cache 17 étant apte à recevoir l'extrémité libre des barres en cuivre 5 à 8, et à être fixé sur le premier support 10.

Les deux supports 10,16 ainsi que le cache 17 sont réalisés dans un matériau électriquement isolant. Du fait que les éléments de raccordement g sont fixés sur la face supérieure des barres 5 à 8, ce support dit second 16 comporte des parties évidées 18 destinées à recevoir les portions de ces éléments de raccordement g par lesquelles ces éléments g sont fixés auxdites barres 5 à 8 et ainsi à absorber le volume des soudures.

Ainsi, parmi toutes les pièces qui composent le dispositif d'alimentation et de raccordement D selon l'invention, certaines sont standards telles que les barres 5 à 8 sur lesquelles on a recoupé des dents d de manière à créer une zone libre z dépourvue de dents, le support dit premier 10 qui est une réutilisation d'un support standard, de même que le bouchon ou cache d'extrémité 17. Les autres pièces sont nouvelles et comprennent les quatre nouvelles dents 11 à 14 ainsi qu'un support isolant dit second 16.

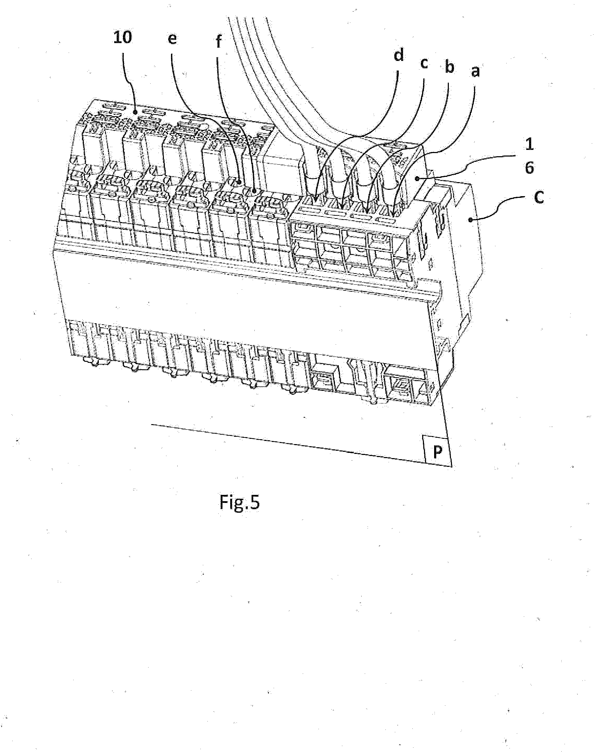

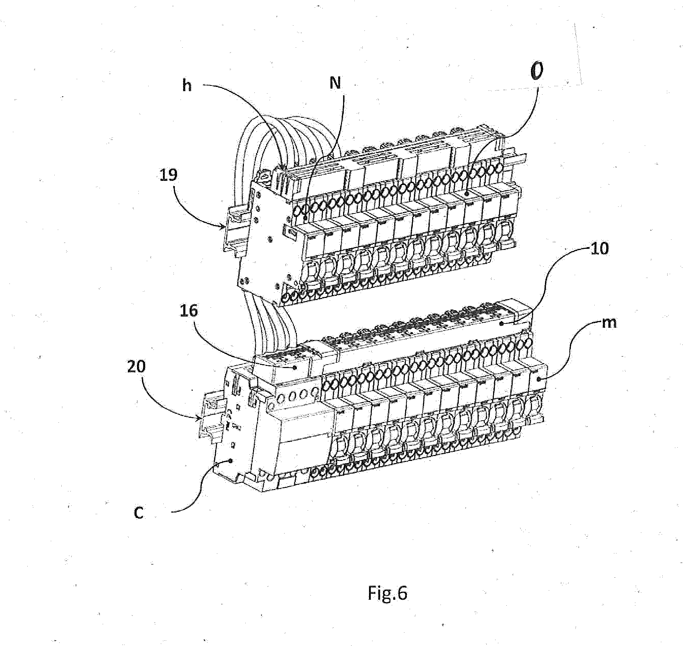

Tel qu'illustré sur les figures 5 et 6, le support dit second 16 présente une dimension suivant une direction sensiblement perpendiculaire au plan de fixation P, qui lui permet de laisser libre une partie de l'ouverture d'accès aux bornes a,b,c,d du contacteur C de manière à permettre l'accès dans ces bornes des parties d'extrémité serties de câbles dont l'autre extrémité est destinée à être reliée électriquement aux bornes d'entrée h d'un appareil de tête N monté au côté d'une série d'appareils modulaires O sur un rail de montage 19 situé au-dessus ou en dessous du premier 20. Ceci permet d'effectuer un repiquage par câbles, sous les dents engagées dans les bornes a,b,c,d du contacteur C afin d'alimenter une seconde rangée de disjoncteurs, cette rangée pouvant être située au-dessus ou au-dessous de la première.

Ainsi, l'invention permet de raccorder électriquement rapidement, sans câble, et sans risque d'erreur, une série d'appareils du type phase neutre modulaires situés à droite en aval d'un contacteur comportant quatre pôles. L'invention permet également de relier électriquement cette rangée d'appareils à une seconde rangée d'appareils située sur un deuxième rail de fixation au-dessus du premier, en réalisant un repiquage par câbles, sous les dents engagées dans les bornes du contacteur.

On a donc réalisé grâce à l'invention un dispositif d'alimentation et de raccordement électrique sous la forme d'un peigne, ledit peigne comportant au départ un certain nombre de dents, ce nombre correspondant au nombre de pôles du contacteur, ces dents étant disposées au pas du contacteur, par exemple de 11mm, ces dents étant fixées à des barres en cuivre comportant des dents d'alimentation disposées suivant le pas des appareils modulaires, c'est-à-dire par exemple au pas de 18mm. L'invention permet ainsi d'obtenir un gain de temps de raccordement, un gain de place, et de supprimer les risques d'inversion de phase par rapport au neutre.

Bien entendu, l'invention n'est pas limitée au mode de réalisation décrit et illustré qui n'a été donné qu'à titre d'exemple.

## Revendications

1. Dispositif (D) d'alimentation et de raccordement électrique d'un contacteur (C) à un ensemble (A) d'appareils électriques modulaires (m) montés côte à côte sur un support de montage (20), ledit dispositif comportant un ensemble de barres conductrices (5 à 8) comprenant une barre conductrice (5) destinée à véhiculer le neutre et des barres conductrices (6 à 8) destinées à véhiculer chacune une phase, les barres conductrices (5 à 8) étant montées dans un support isolant (10) dit premier, chaque barre comportant des dents (d) de raccordement aux différentes bornes (e,f) des appareils électriques modulaires (m), ces dents étant alignées suivant un premier pas correspondant à celui des appareils modulaires (m), l'ensemble constitué par le premier support (10) et les barres (5 à 8) présente deux rangées (R, S) de dents, respectivement une rangée (R) de dents de neutre (n) et une rangée (S) de dents de phase (p), avec interposition d'une dent de neutre (n) entre deux dents de phase (p) successives,
le dispositif comportant un certain nombre de dents supplémentaires (11 à 14), **caractérisé en ce que** ce nombre correspond au nombre de barres (5 à 8), ces dents supplémentaires (11 à 14) étant fixées et reliées électriquement respectivement auxdites barres (5 à 8), sur une zone (z) dépourvue de dents (d) située à l'une des extrémités desdites barres (5 à 8) d'un côté dudit ensemble de barres conductrices (5 à 8), ces dents supplémentaires (11 à 14) étant alignées suivant la direction longitudinale des barres et suivant un deuxième pas correspondant à celui du contacteur (C), et étant destinées à être raccordées électriquement respectivement aux différentes bornes (a,b,c,d) du contacteur (C) lorsque le contacteur (C) et l'ensemble d'appareils électriques modulaires (m) sont montés côte à côte sur le support de montage (20).

2. Système comprenant un contacteur (C), des appareils électriques modulaires (m) adaptés à être montés côte à côte sur un support de montage (20) et un dispositif (D) d'alimentation et de raccordement électrique selon la revendication 1, dans lequel :
- ledit contacteur (C) comporte quatre pôles (1 à 4), chaque pôle comportant une borne (a,b,c,d), tandis que le dispositif (D) comprend quatre desdites dents supplémentaires (11 à 14),
- les dents supplémentaires s'étendent suivant une direction sensiblement perpendiculaire à un plan (P) de fixation des appareils (m) sur le support de montage (20), de telle manière que ces dents supplémentaires puissent être raccordées respectivement aux différents éléments de raccordement des bornes du contacteur (C).

3. Dispositif d'alimentation et de raccordement électrique selon la revendication 1, **caractérisé en ce que** chaque barre (5 à 8) est réalisée à partir d'une barre sur laquelle a été effectuée une découpe de manière à réaliser la zone (z) dépourvue de dents (d) précitée.

4. Dispositif d'alimentation et de raccordement électrique selon l'une quelconque des revendications 1 ou 3, **caractérisé en ce que** la zone (z) dépourvue de dents (d) précitée s'étend au-delà de l'enveloppe du support isolant dit premier (10), et **en ce que** le dispositif (D) comporte également un support isolant dit second (16) apte à loger les zones (z) dépourvues de dents précitées desdites barres (5 à 8), ledit second support (16) étant destiné à être fixé de manière amovible au premier support (10).

5. Dispositif d'alimentation et de raccordement électrique selon la revendication 4, le support isolant dit premier (10) comportant des logements (9) destinés à loger les barres (5 à 8) s'étendant suivant une direction sensiblement parallèle à la direction d'alignement des dents (d), **caractérisé en ce que** le support isolant dit second (16) comporte des logements (15) de barres (5 à 8) s'étendant dans le prolongement respectivement de ceux (9) du support isolant dit premier (10).

6. Dispositif d'alimentation et de raccordement électrique selon l'une des revendications précédentes 1, 3, 4 ou 5, **caractérisé en ce que** les dents supplémentaires précitées (11 à 14) sont fixées respectivement sur la face supérieure (i) des barres précitées (5 à 8), cette face étant située du côté opposé à celle (j) située en regard des appareils modulaires précités (m).

7. Dispositif d'alimentation et de raccordement électrique selon l'une des revendications précédentes 1, 3, 4, 5 ou 6, **caractérisé en ce que** les dents supplémentaires précitées (11 à 14) sont fixées par soudure sur lesdites barres (5 à 8).

8. Système comprenant un contacteur (C), des appareils électriques modulaires (m) adaptés à être montés côte à côte sur un support de montage (20) et un dispositif (D) d'alimentation et de raccordement électrique selon la revendication 4, **caractérisé en ce que** le support isolant dit second (16) présente une dimension suivant une direction sensiblement perpendiculaire au plan (P) de fixation des appareils (m) sur le support de montage (20), permettant de laisser libre une partie de l'ouverture d'accès aux bornes (a,b,c,d) du contacteur (C), ceci afin de permettre le repiquage par câbles, sous les dents (d) du dispositif (D) d'alimentation et de raccordement, lesdites dents étant engagées dans les bornes (a,b,c,d) du contacteur (C).

9. Dispositif d'alimentation et de raccordement électrique selon l'une quelconque des revendications précédentes 1, 3, 4, 5, 6 ou 7, **caractérisé en ce que** le dispositif (D) est du type tripolaire et neutre comportant une barre (5) distribuant le neutre et trois barres (6,7,8) distribuant une phase, lesdites dents (d) étant alignées et distribuant successivement les différentes phases avec interposition d'une dent distribuant le neutre entre deux dents de phase successives.

10. Dispositif d'alimentation et de raccordement électrique selon l'une des revendications précédentes 1, 3, 4, 5, 6, 7 ou 9, **caractérisé en ce que** les dents supplémentaires (11 à 14) sont disposées suivant un pas de 11mm, tandis que les dents (d) destinées à être reliées électriquement aux appareils modulaires (m) sont disposées suivant un pas de 18mm.

11. Système selon la revendication 2 ou 8, **caractérisé en ce que** chaque appareil modulaire (m) est un appareil du type phase et neutre comportant un circuit de phase et un circuit de neutre.

## Patentansprüche

1. Vorrichtung (D) zur Stromversorgung und elektrischen Verbindung eines Schützes (C) mit einer Anordnung (A) modularer elektrischer Geräte (m), die Seite an Seite an einer Montagehalterung (20) montiert sind, die Vorrichtung umfassend eine Anordnung von Stromschienen (5 bis 8), umfassend eine Stromschiene (5), die dazu bestimmt ist, den Nullleiter zu leiten, und Stromschienen (6 bis 8), die dazu bestimmt sind, jeweils eine Phase zu leiten, wobei die Stromschienen (5 bis 8) in einer sogenannten ersten isolierenden Halterung (10) montiert sind, jede Schiene umfassend Zähne (d) zum Anschluss an die verschiedenen Klemmen (e, f) der modularen elektrischen Geräte (m), wobei diese Zähne gemäß einer ersten Teilung ausgerichtet sind, die jener der modularen Geräte (m) entspricht, wobei der durch die erste Halterung (10) und die Schienen (5 bis 8) gebildete Anordnung zwei Reihen (R, S) von Zähnen aufweist, jeweils eine Reihe (R) von Neutralzähnen (n) und eine Reihe (S) von Phasenzähnen (p), wobei ein Neutralzahn (n) zwischen zwei aufeinanderfolgende Phasenzähne (p) eingefügt ist,
die Vorrichtung umfassend eine gewisse Anzahl von ergänzenden Zähnen (11 bis 14), **dadurch gekennzeichnet, dass** diese Anzahl der Anzahl an Schienen (5 bis 8) entspricht, wobei diese ergänzenden Zähne (11-14) jeweils an einem Bereich (z) ohne Zähne (d), der sich an einem der Enden der Schienen (5-8) auf einer Seite der Anordnung von Stromschienen (5-8) befindet, an den Schienen (5-8) befestigt und elektrisch verbunden sind, wobei diese ergänzenden Zähne (11 bis 14) in Längsrichtung der Schienen und in einer zweiten Teilung ausgerichtet sind, die jener des Schützes (C) entspricht, und dazu bestimmt sind, jeweils elektrisch mit den verschiedenen Klemmen (a, b, c, d) des Schützes (C) verbunden zu werden, wenn das Schütz (C) und die Anordnung modularer elektrischer Geräte (m) Seite an Seite an der Montagehalterung (20) montiert sind.

2. System, umfassend ein Schütz (C), modulare elektrische Geräte (m), die angepasst sind, um Seite an Seite auf einer Montagehalterung (20) montiert zu werden, und eine Vorrichtung (D) zur Stromversorgung und elektrischen Verbindung nach Anspruch 1, wobei:
- das Schütz (C) vier Pole (1 bis 4) umfasst, jeder Pol umfassend eine Klemme (a, b, c, d), während die Vorrichtung (D) vier der ergänzenden Zähne (11 bis 14) umfasst,
- sich die ergänzenden Zähne in einer Richtung erstrecken, die im Wesentlichen senkrecht zu einer Ebene (P) der Befestigung der Geräte (m) an der Montagehalterung (20) ist, sodass diese ergänzenden Zähne jeweils mit den verschiedenen Verbindungselementen der Klemmen des Schützes (C) verbunden werden können.

3. Vorrichtung zur Stromversorgung und elektrischen Verbindung nach Anspruch 1, **dadurch gekennzeichnet, dass** jede Schiene (5 bis 8) aus einer Schiene gefertigt ist, an der ein Einschnitt vorgenommen wurde, um den vorgenannten Bereich (z) ohne Zähne (d) zu realisieren.

4. Vorrichtung zur Stromversorgung und elektrischen Verbindung nach einem der Ansprüche 1 oder 3, **dadurch gekennzeichnet, dass** der vorgenannte Bereich (z) ohne Zähne (d) sich über die Hülle der sogenannten ersten isolierenden Halterung (10) hinaus erstreckt, und dass die Vorrichtung (D) auch eine sogenannte zweite isolierende Halterung (16) umfasst, die geeignet ist, um die vorgenannten zahnlosen Bereiche (z) der genannten Schienen (5 bis 8) aufzunehmen, wobei die zweite Halterung (16) dazu bestimmt ist, lösbar an der ersten Halterung (10) befestigt zu werden.

5. Vorrichtung zur Stromversorgung und elektrischen Verbindung nach Anspruch 4, die sogenannte erste isolierende Halterung (10) umfassend Aufnahmen (9) zum Aufnehmen der Schienen (5-8), die sich in einer Richtung erstrecken, die im Wesentlichen parallel zu der Zahnausrichtungsrichtung (d) ist, **dadurch gekennzeichnet, dass** die sogenannte zweite isolierende Halterung (16) Aufnahmen (15) von Schienen (5 bis 8) umfasst, die sich jeweils in der Verlängerung der Aufnahmen (9) der sogenannten ersten isolierenden Halterung (10) erstrecken.

6. Vorrichtung zur Stromversorgung und elektrischen Verbindung nach einem der vorherigen Ansprüche 1, 3, 4 oder 5, **dadurch gekennzeichnet, dass** die vorgenannten ergänzenden Zähne (11 bis 14) jeweils an der Oberseite (i) der vorgenannten Schienen (5 bis 8) befestigt sind, wobei sich diese Seite auf der gegenüberliegenden Seite der Seite (j) befindet, die sich gegenüber den vorgenannten modularen Geräten (m) befindet.

7. Vorrichtung zur Stromversorgung und elektrischen Verbindung nach einem der vorherigen Ansprüche 1, 3, 4, 5 oder 6, **dadurch gekennzeichnet, dass** die vorgenannten ergänzenden Zähne (11 bis 14) durch Schweißen an den Schienen (5 bis 8) befestigt sind.

8. System, umfassend ein Schütz (C), modulare elektrische Geräte (m), die angepasst sind, um Seite an Seite auf einer Montagehalterung (20) montiert zu werden, und eine Vorrichtung (D) zur Stromversorgung und elektrischen Verbindung nach Anspruch 4, **dadurch gekennzeichnet, dass** die sogenannte zweite isolierende Halterung (16) eine Abmessung entlang einer Richtung aufweist, die im Wesentlichen senkrecht zu der Ebene (P) der Befestigung der Geräte (m) an der Montagehalterung (20) ist, was es ermöglicht, einen Teil der Zugangsöffnung zu den Klemmen (a, b, c, d) des Schützes (C) frei zu lassen, dies, um die Rückverdrahtung unter den Zähnen (d) der Vorrichtung (D) zur Stromversorgung und elektrischen Verbindung zu ermöglichen, wobei die Zähne in die Klemmen (a, b, c, d) des Schützes (C) eingreifen.

9. Vorrichtung zur Stromversorgung und elektrischen Verbindung nach einem der vorherigen Ansprüche 1, 3, 4, 5, 6 oder 7, **dadurch gekennzeichnet, dass** die Vorrichtung (D) vom Typ dreipolig und Nullleiter ist, umfassend eine Schiene (5), die den Nullleiter verteilt, und drei Schienen (6, 7, 8), die eine Phase verteilen, wobei die Zähne (d) ausgerichtet sind und nacheinander die verschiedenen Phasen verteilen, wobei ein Zahn, der den Nullleiter verteilt, zwischen zwei aufeinanderfolgende Phasenzähne eingefügt ist.

10. Vorrichtung zur Stromversorgung und elektrischen Verbindung nach einem der vorherigen Ansprüche 1, 3, 4, 5, 6, 7 oder 9, **dadurch gekennzeichnet, dass** die ergänzenden Zähne (11 bis 14) in einem Abstand von 11 mm angeordnet sind, während die Zähne (d), die dazu bestimmt sind, elektrisch mit den modularen Geräten (m) verbunden zu werden, in einem Abstand von 18 mm angeordnet sind.

11. System nach Anspruch 2 oder 8, **dadurch gekennzeichnet, dass** jedes modulare Gerät (m) ein Gerät vom Typ Phase und Nullleiter ist, umfassend einen Phasenstromkreis und einen Nullleiterstromkreis.

## Claims

1. Device (D) for supplying power to a contactor (C) and for electrically connecting it to a set (A) of modular electrical devices (m) mounted side by side on a mounting support (20), said device including an assembly of conductive bars (5 to 8), comprising one conductive bar (5) for distributing the neutral and conductive bars (6,7,8) for distributing a phase, the conductive bars (5 to 8) being mounted in a so-called first insulative support, each bar including teeth (d) for connection to the various terminals (of the modular electrical devices (m), those teeth being aligned with a first pitch corresponding to that of the modular devices (m), the assembly consisting of the first support (10) and the bars (5 to 8) having two rows (R, S) of teeth, namely a row (R) of neutral teeth (n) and a row (S) of phase teeth (p), with a neutral tooth (n) disposed between two successive phase teeth (p),
the device comprising a certain number of supplementary teeth (11 to 14), **characterized in that** that number corresponds to the number of bars (5 to 8), those supplementary teeth (11 to 14) being fixed to and electrically connected to respective bars (5 to 8) in a zone (z) without teeth (d) situated at one of the ends of said bars (5 to 8) on one side of said assembly, those supplementary teeth (11 to 14) being aligned in the longitudinal direction of the bars with a second pitch corresponding to that of the contactor C and being intended to be electrically connected to respective terminals (a,b,c,d) of the contactor C when the contactor (C) and the set of modular electrical devices (m) are mounted side by side on the same mounting support (20).

2. System comprising a contactor (C), modular electrical devices (m) configured to be mounted side by side on a mounting support (20), and an electrical power supply and connection device (D) according to claim 1, wherein:
- said contactor (C) comprises four terminals (a,b,c,d), whereas the device (D) comprises four or said supplementary teeth (11 to 14),
- the supplementary teeth extend in a direction substantially perpendicular to a fixing plane of the modular electrical devices (m) on the mounting support (20), in such a manner that those supplementary teeth can be connected to the respective connection elements of the terminals (a,b,c,d) of the contactor (C).

3. Electrical power supply and connection device according to claim 1, **characterized in that** each bar (5 to 8) is produced from a bar that has been cut out in such a manner as to produce the aforementioned zone (z) without teeth (d).

4. Electrical power supply and connection device according to claim 1 or 3, **characterized in that** the aforementioned zone (z) without teeth extends beyond the envelope of the so-called first insulative support (10), and **in that** the device D also includes a so-called second insulative support (16) adapted to house the aforementioned zones (z) of said bars (5 to 8) without teeth, said second support (16) being intended to be fixed in a removable manner to the first support (10).

5. Electrical power supply and connection device according to claim 4, the so-called first insulative support (10) including housings (9) intended to house the bars (5 to 8) extending in a direction substantially parallel to the direction of alignment of the teeth (d), **characterized in that** the so-called second insulative support (16) includes housings (15) for the bars (5 to 8) extending in line with the respective bars (9) of the so-called first insulative support (10).

6. Electrical power supply and connection device according to one of claims 1, 3, 4 or 5, **characterized in that** the aforementioned supplementary teeth (11 to 14) are fixed to the upper face (i) of the respective bars (5 to 8), that face being situated on the side opposite that (j) situated facing the aforementioned modular devices (m).

7. Electrical power supply and connection device according to one of claims 1, 3, 4, 5 or 6, **characterized in that** the aforementioned supplementary teeth (11 to 14) are fixed to said bars (5 to 8) by welding them thereto.

8. System comprising a contactor (C), modular electrical devices (m) configured to be mounted side by side on a mounting support (20), and an electrical power supply and connection device (D) according to Claim 4, **characterized in that** the so-called second insulative support (16) has a dimension in a direction substantially perpendicular to the plane P in which the devices (m) are fixed to the mounting support (20), enabling a part of the access opening to the terminals (a,b,c,d) of the contactor C to remain free, in order to enable insertion of cables under the teeth (d) of the power supply and connection device D, said teeth being engaged in the terminals (a,b,c,d) of the contactor (C).

9. Electrical power supply and connection device according to any one of the preceding claims 1, 3, 4, 5, 6 or 7, **characterized in that** the device (D) is of the three-pole and neutral type including a bar (5) distributing the neutral and three bars (6,7,8) distributing a phase, said teeth (d) being aligned and successively distributing the various phases with a tooth distributing the neutral disposed between two successive phase teeth.

10. Electrical power supply and connection device according to one of the preceding claims 1, 3, 4, 5, 6, 7 or 9, **characterized in that** the supplementary teeth (11 to 14) are disposed with a pitch of 11 mm whereas the teeth intended to be electrically connected to the modular devices (m) are disposed with a pitch of 18 mm.

11. System according to one of claims 2 or 8, **characterized in that** each modular device (m) is a device of the phase and neutral type including a phase circuit and a neutral circuit.
